# EUROPEAN PATENT SPECIFICATION

(11) **EP 3 408 175 B1**
(45) Date of publication and mention of the grant of the patent: **27.11.2019**
(21) Application number: 17705451.7
(22) Date of filing: 23.01.2017
(51) Int. Cl.: B64C 39/02, H02S 50/15

(54) **UTILISING UAVS FOR DETECTING DEFECTS IN SOLAR PANEL ARRAYS**
VERWENDUNG VON UAVS ZUR DETEKTION VON DEFEKTEN IN SOLARPANEELANORDNUNGEN
UTILISATION D'UAV POUR DÉTECTER DES DÉFAUTS DE RÉSEAUX DE PANNEAUX SOLAIRES

(30) Priority: 25.01.2016 GB 201601303; 20.04.2016 GB 201606891
(43) Date of publication of application: 05.12.2018
(73) Proprietor: Above Surveying Ltd., Colchester, Essex CO3 8AB (GB)
(72) Inventor: HITCHCOCK, William John, Colchester Essex CO6 4JD (GB)
(74) Representative: Sandersons
(86) International application number: PCT/GB2017/050168
(87) International publication number: WO 2017/129960

(56) References cited:
- JP-A- 2015 058 758
- KR-B1- 101 550 780
- US-A1- 2013 233 964
- US-A1- 2016 004 795
- Tom Lombardo: "UAVs to Inspect Solar Farms", Engineering.com, 24 July 2014 (2014-07-24), pages 1-3, XP055218955, Retrieved from the Internet: URL:https://web.archive.org/web/2014072415 1251/http://www.engineering.com/Electronic sDesign/ElectronicsDesignArticles/ArticleI D/7544/UAVs-to-Inspect-Solar-Farms.aspx [retrieved on 2015-10-07]

## Description

This invention relates, in a first aspect thereof, to an unmanned aerial vehicle (UAV), modified for use in detecting and assessing defects in solar panel arrays. In a second aspect thereof, the invention further relates to apparatus for detecting and assessing defects in solar panel arrays, including such a modified UAV. In a third aspect thereof, the invention further relates to a method for detecting and assessing defects in solar panel arrays, utilising such apparatus.

The present invention is primarily concerned with the detection and assessment of defective solar panels in large-scale solar array installations, such as solar farms, and will therefore be described herein with particular emphasis on this application. It will be appreciated however that the scope of the present invention is not limited to such use, and all aspects of the invention may find use in other applications.

A defect in a solar panel presents as a 'hotspot', *i.e.* a mismatch between the surface temperature of the defective panel, compared to adjacent normally functioning panels. This mismatch is measurable as a temperature gradient, through the use of a thermographic camera. The observed temperature gradient can occur either across a panel, or within a panel in single or multiple cells. Until very recently, the standard method of inspecting a solar farm for defective panels was to use a hand-held thermographic camera. In view of the scale of solar farms, this method is time consuming and labour intensive. Moreover, the results produced by such methods have been found to be inaccurate and inconsistent.

More recently, unmanned aerial vehicles (UAVs) - also referred to as drones - are now being used to carry out thermographic inspections of large solar arrays. The use of a UAV-mounted thermographic camera with georeferenced images can significantly speed up the process as well as increasing the accuracy of the recording of the defective solar panel location. JP 2015-58758 discloses a structure check system comprising an imaging part that is provided with an infrared camera to acquire imaging data containing temperature data of an imaging object. A control part acquires the positional information and an imaging data storage part saves the imaging data. The imaging data is obtained with the positional information that shows the acquisition position of the imaging data, which is saved in the imaging data storage part.

The extent of the temperature gradient presented by a defective solar panel is often an indication of the nature and significance of the defect, its impact on electricity generation and its likelihood of degrading further. However, the temperature gradient is also a function of the solar irradiance to which the solar panel was exposed at the time of measurement. Solar irradiance changes constantly throughout daylight hours - and more importantly, varies significantly between sunny and cloudy conditions. A single cloud shading a section of a solar array can cause a significant drop in solar irradiance.

As such, in order for temperature gradient data collected during a solar panel inspection to be properly interpreted, it is important to understand the level of solar irradiance at the precise time and location when the thermographic image was captured. Reliable time- and location-specific solar irradiance data, measurable with a pyranometer, is therefore of high value when reviewing the inspection data and deciding on remedial action in respect to an apparently defective solar panel.

Until now, thermographic imaging data collected during a solar panel array inspection has been cross-referenced with solar irradiance data measured via a static, ground-based pyranometer. However, this method does not take account of variations in solar irradiance during the inspection process or across the length and width of the array. This can again lead to inaccurate, inconsistent and unreliable results.

There are a range of different possible defects in solar panels, which may present as a temperature gradient across the panel. These include physical damage to panels, soiling of the panel surface, electrical connection faults, and degenerative defects. Degenertive defects are difficult to detect in their early stages by conventional means, but if left unchecked can cause major problems for solar installations.

One example of such a degenerative defect is a phenomenon known as Potential Induced Degradation (PID). PID is an inherent defect which arises in some solar panels (also referred to as modules), and occurs when the potential (voltage) causes ion mobility in the module's semi-conductor material. This causes the module's power output capacity to degrade. PID presents a major problem for solar farm operators, since in its early stages it is difficult to detect via conventional methods, but if left unchecked it can spread from one module to another in an array. Modules in a solar array are typically arranged in "strings" of 24 modules connected in series. PID generally initiates at the negative end of such a string, but can then spread through the modules in the string.

The present invention seeks to address the above issues by mounting a custom-made geo-referencing pyranometer onto a UAV, so that solar irradiance can be measured during flight, and the time and GPS co-ordinates of each measurement can be logged. It will therefore now be possible for thermographic images to be cross-referenced with corresponding solar irradiance data. This will enable more informed analysis of the apparently defective panel, and will inform consideration of possible remedial action, or further diagnostics. A major benefit of the present invention is that it enables early detection and analysis of degenerative defects such as Potential Induced Degradation (PID). Defective modules can then be repaired or replaced.

According to a first aspect of the present invention there is provided an unmanned aerial vehicle (UAV) having remotely controllable and/or programmable control means, thereby to direct said UAV's flight path, said UAV having the following components mounted thereon:
- a thermographic camera;
- a pyranometer;
- a global positioning system (GPS) receiver; and
- a data logger, adapted to log data from at least the pyranometer and the GPS receiver during flight of said UAV;
wherein the pyranometer and the GPS receiver together form a geo-referencing pyranometer.

The UAV of the present invention preferably further has a visual imaging camera mounted thereon. By using the pyranometer to record the solar irradiance at the precise time and location where temperature gradients are observed, the UAV operator or post-flight analyst can identify variations in reported temperature gradients which may be attributable to fluctuations in the solar irradiance, rather than the severity of a defect in a panel or cell.

The unmanned aerial vehicle (UAV) is preferably a rotary wing UAV.

As noted above, the UAV preferably has a visual (RGB) imaging camera mounted thereon. The use of a visual (RGB) imaging camera is desirable in order to carry out preferred embodiments of the method for which the UAV according to the first aspect of the present invention is intended. However, whilst it is preferred that the visual imaging camera should be mounted on the same UAV as the other components, as an alternative arrangement, a second UAV may be employed, on which said visual imaging camera is provided. This alternative arrangement enables the overall weight of the UAV of the present invention to be reduced, and this in turn improves battery life on the UAV and thus lengthens possible flight time.

In preferred embodiments in which the thermographic and visual imaging cameras are mounted on the UAV of the invention, the UAV can record and report both thermographic and visual images, which can be cross-referenced with the temperature gradient data, solar irradiance data, and GPS data for any location in a solar array. The visual and thermographic imagery is preferably provided to the UAV operator for viewing during flight via a live video link. In the alternative arrangement in which the visual imaging camera is provided on a second UAV, these processes are still carried out, using the RGB imaging data from the flight of the second UAV, which may be carried out either before, after, or preferably simultaneously with the flight of the UAV of the invention.

Providing visual imagery of the panels assists in identifying the physical location of panels reporting defects, and also enables the UAV operator or post-flight analyst to characterise the defect by cross-referencing the visual and thermographic imagery. The analyst can use the visual imagery data to observe physical damage or obstructions on the surface of panels. Obstructions, such as dirt present on the surface of panels can lead to variations in reported temperature gradient data which might otherwise be attributed to the severity of a defect. In this way, the analyst can also identify defects which might be attributable to degenerative defects such as PID.

The thermographic camera and/or the visual imaging camera preferably have geo-referencing functionality, which further assists with the above described assessment of defects. The thermographic camera and/or the visual imaging camera may log their GPS data to a local memory card, such as an SD card. This data can then be cross-referenced post-flight with the logged solar irradiance data.

In a preferred embodiment of the invention, the data logger is further adapted to communicate logged data to a remote device during flight. This enables the 'live' viewing of data whilst an inspection is taking place. To this end, the data logger is preferably adapted to communicate the logged data over a mobile telecommunications network via a GSM standard signal.

In a further preferred embodiment of the invention, the data logger is further adapted to log data from the thermographic camera, and/or the visual imaging camera, when present, in addition to the pyranometer and the GPS receiver.

Alternatively, or additionally, the data logger may preferably be or comprise an embedded computer, or an embedded computer may be provided as a further component, in communication with said data logger. The embedded computer is preferably adapted to store all the generated data sets from the other components, and more preferably is further adapted at least partially to process said data on the UAV.

The pyranometer is preferably a light-weight pyranometer. Most preferably, the combined mass of the pyranometer, the GPS receiver, and the data logger is no more than 1kg. The pyranometer may be any sensor capable of measuring solar irradiance, such as a reference cell. In preferred embodiments of the invention however, the pyranometer is a silicon cell pyranometer.

As will be appreciated, the communication of data to and from the UAV is an important facet of the inspection process. Therefore, according to a second aspect of the present invention there is provided apparatus for detecting and assessing defects in solar panel arrays, said apparatus comprising an unmanned aerial vehicle (UAV) as hereinbefore described, and one or more remote devices in communication therewith. In the alternative arrangement in which the UAV does not comprise a visual imaging camera, the apparatus according to the second aspect of the present invention will further comprise a second UAV having a visual imaging camera mounted thereon.

Preferably, said apparatus comprises a remote device, such as a PC, laptop, tablet computer or smartphone, adapted to receive data from said data logger. Most preferably, said remote device is further adapted to receive data from said thermographic camera and/or said visual imaging camera.

The remote device preferably comprises a processor adapted to process said data and to report cross-referenced thermographic data and solar irradiance data for a given GPS-referenced location in a solar panel array. Most preferably, the remote device is further adapted to process and report visual imaging data for a given GPS-referenced location.

In preferred embodiments of the present invention, the remote device is further adapted to process recorded solar irradiance data, in order to correct for the angle of tilt of the solar panels in an array. The processor of the remote device is therefore preferably programmed with an algorithm developed to correct a measured irradiance (Eₘ) collected in the horizontal plane, to a corrected irradiance (E_{c}) to allow for the angle of tilt of solar panels in an array.

The above described processing is required because irradiance data is collected in the horizontal plane by the UAV. This must therefore be corrected in order to calculate the irradiance to which the angled surface of the solar panel is exposed. An alternative approach would be to tilt the pyranometer to match the angle of tilt of the solar panels in an array, before each survey is carried out.

The remote device is preferably further adapted also to process recorded thermographic data, in order to normalise the data to a standard level of irradiance. The processor of the remote device is therefore preferably programmed with an algorithm developed to normalise a recorded measured temperature gradient (ΔTₘ) at a corrected irradiance (E_{c}), to a normalised temperature gradient (ΔTₙ) at a standard irradiance. Whilst in theory, any value of standard irradiance could be used, it is preferred to use a standard irradiance value of 1000W/m².

The thermal gradient measured across a defect in a solar panel is a function of the severity of the defect and the solar irradiance to which the defective solar panel was subjected at the time of the thermal gradient being measured. Normalising the temperature gradient data to a standard irradiance level therefore enables the comparison of defects within a survey, or across different surveys.

Processing the irradiance and thermographic data in this way enables defects to be categorised in terms of their nature, severity, and prognosis for further deterioration. The processing also enables direct comparison of inspections carried out at different irradiance levels, as for example would occur at different times of year, so that the level of deterioration of a defective panel can be monitored.

The apparatus may desirably comprise a remote device adapted to transmit pre-determined flight path data to the UAV's control means. This remote device may be the same device as is adapted to receive data from the data logger, or may be a separate remote device.

The remote device to which the logged data is communicated may take the form of an online, web-based portal. All data recorded, together with any subsequent analysis carried out by the UAV operator or post-flight analyst, may be displayed on the portal. The user (usually the solar farm owner, manager or operator) may then access the portal via a personalised login, in order to view all data associated with a particular inspection. The data may desirably include a zoomable map, in which the data logged and processed from the inspection is overlayered onto an existing map of the solar panels in an inspected array - such as a CAD drawing of the solar farm. The user can thus clearly identify the location of defective panels.

The portal may display data relating to a number of different inspections of the same solar array carried out at different times. By utilising the normalised thermal gradient data, which takes into account variations in the incident solar irradiance at the time of the inspection, the user may thus make a comparison between data collected at different times and in different conditions. This enables the user to ascertain whether a particular defect has improved (for example following maintenance or repair) or deteriorated. Such comparisons can also assist the user in determining whether defects have been correctly characterised.

Where defects are attributable to degenerative defects such as PID, the plotting of the location of defective modules on the map can assist the user in understanding the factors that may be promoting the occurrence of the defect. For example, PID may be observed in modules at a particular location on a site, or in modules of a certain age, or in modules originating from a particular manufacturer, supplier or batch. By looking for such trends in the occurrence of PID, the user can predict where future occurrences of PID may arise, and monitor those locations more closely in order to catch PID as soon as it occurs, and so prevent its spread along a string.

The present invention further provides, according to a third aspect thereof, a method for detecting and assessing defects in a solar panel array, using an unmanned aerial vehicle (UAV) as hereinbefore described, said method comprising performing the steps of:
(i) mapping the location of panels in a solar array;
(ii) utilising mapped data collected in step (i) to generate an optimal waypoint flight path for said UAV;
(iii) transmitting the optimal waypoint flight path data generated in step (ii) to the control means of said UAV; and
(iv) flying said UAV over said solar array using said optimal waypoint flight path, whilst simultaneously recording at least thermographic imaging data and logging solar irradiance and GPS data;
and subsequently:
(v) processing data recorded and logged in step (iv to identify and report defective panels by temperature gradient, with cross-referenced solar irradiance data, thermographic imagery and GPS location data.

In preferred embodiments of the above method in which the UAV has a visual imaging camera mounted thereon, visual imaging data will also be recorded in step (iv), and the data processed in step (v) will also include cross-referenced visual imagery data from step (iv) .

In the alternative arrangement in which the UAV does not have a visual imaging camera mounted thereon, the method will include an additional sub-step of:
(iv)(a) flying a second UAV having a visual imaging camera mounted thereon, over said solar array using said optimal waypoint flight path, whilst simultaneously recording visual imaging data. In this alternative arrangement, step (v) will necessarily require the data recorded in sub-step (iv)(a) to be compiled and processed along with the data recorded and logged in step (iv). Sub-step (iv)(a) may be carried out either before, after, or preferably simultaneously with the performance of step (iv).

In practice, the step (i) of mapping the location of panels in a solar array may already have been carried out prior to the inspection process, in which case the mapped data may already be available (for example in the form of a CAD drawing) which can be used directly to generate the optimal waypoint flight path data in step (ii).

Step (v) of the method preferably includes processing the recorded solar irradiance data, thereby to correct a measured irradiance (Eₘ) collected in the horizontal plane, to a corrected irradiance (E_{c}) to allow for the angle of tilt of solar panels in an array, as described above with reference to the second aspect of the invention.

Step (v) preferably further includes processing recorded thermographic data, thereby to normalise a recorded measured temperature gradient (ΔTₘ) at a corrected irradiance (E_{c}) to a normalised temperature gradient (ΔTₙ) at a standard irradiance of 1000W/m², as also described above with reference to the second aspect of the invention. The solar irradiance and GPS data logged in step (iv) may preferably be transmitted to a remote device, as hereinbefore described with reference to the second aspect of the present invention. Most preferably, the thermographic and visual imaging data recorded in step (iv), or in step (iv) and sub-step (iv)(a), is also transmitted to said remote device. The processing and analysis in step (v) is preferably performed using said remote device.

The generation and transmittal of the optimum waypoint flight in steps (ii) and (iii) is preferably performed using a remote device. This may be the same remote device which receives the data from the data logger, or may be a separate remote device. Preferably, the optimal waypoint flight path data transmitted to the UAV control means in step (iii) also includes flight height and speed. The optimal flight height utilised in the method of the present invention is generally around 20m, which is lower than conventional flight heights used in UAV inspections. This lower flight height facilitates better resolution of the thermal imaging data, which in turn assists with the detection and analysis of degenerative defects such as PID.

The method preferably further includes an additional step (vi) of transmitting the logged, processed and analysed data to a web portal as hereinbefore described with reference to the second aspect of the invention.

In order that the present invention may be more clearly understood, a preferred embodiment thereof will now be described in detail, though only by way of example, with reference to the accompanying drawings, in which:
Figure 1 shows a schematic representation of a preferred embodiment of an unmanned aerial vehicle (UAV) according to the first aspect of the present invention; and
Figure 2 shows a schematic representation of the UAV of Figure 1 in use, carrying out an inspection of a solar panel array.

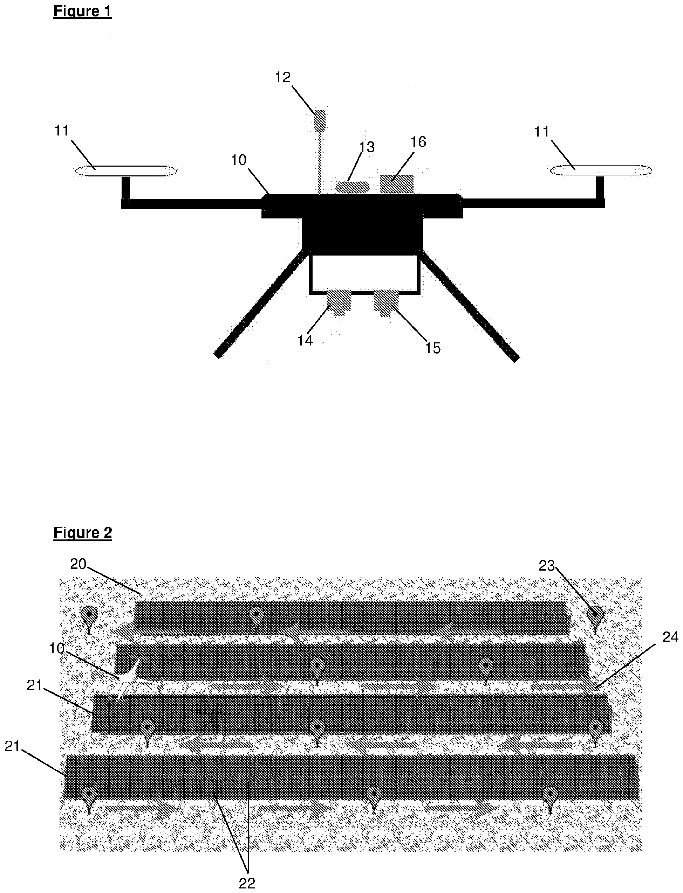

Referring first to Figure 1, there is shown an unmanned aerial vehicle (UAV) 10, according to a preferred embodiment of a first aspect of the present invention. As can be seen, the UAV 10 is of the rotary wing type, having a plurality of rotors 11. The UAV 10 has mounted thereon a number of instruments: a pyranometer 12 for measuring solar irradiance; a GPS receiver 13 for accurately tracking the location of the UAV 10; a thermographic camera 14 for recording thermographic data and images; a visual (RGB) camera 15 for recording visual images; and a data logger 16 for recording data from the pyranometer 12 and the GPS receiver 13. The pyranometer 12 and GPS receiver 13 together form a geo-referencing pyranometer. The thermographic camera 14 and the visual camera 15 also have geo-referencing functionality.

As hereinbefore discussed, in an alternative arrangement, the visual (RGB) camera 15 may instead be mounted on a second UAV (not shown).

The UAV 10 is provided with integral control means (not shown), which may be programmable, or remotely controllable, to direct the flight path of the UAV 10.

The data logger 16 is also adapted to transmit logged solar irradiance and GPS data to a remote device (not shown) during operation of the UAV 10, so that live data can be viewed during a solar array inspection. The thermographic camera 14 and visual camera 15, are adapted also to transmit live video data to a remote device for viewing during flight of the UAV 10.

The UAV 10 and the remote device together constitute apparatus for detecting defects in solar panel arrays, according to a second aspect of the present invention.

Referring now to Figure 2, there is shown the UAV 10 as hereinbefore described with reference to Figure 1, in use for the inspection of a solar panel array 20. The solar array 20 is made up of several banks 21 of panels, each bank 21 featuring multiple individual solar panels 22.

A method according to a third aspect of the present invention, for detecting defects in a solar panel array 20, using an unmanned aerial vehicle (UAV) 10, will now be described, with reference to Figures 1 and 2.

Step (i) of the method requires the location of the panels 22 and panel banks 21 in a solar array 20 to be mapped, or geo-referenced. In practice, this step may already have been carried out prior to the inspection process.

In step (ii), the mapped data collected in step (i) is used to generate an optimal waypoint flight path for the UAV 10. The waypoints 23 and the flight path 24 are illustrated figuratively in Figure 2.

Step (iii) is to transmit the optimal waypoint flight path data 24 generated in step (ii) to the control means of the UAV 10. The flight path data 24 will also include flight height (altitude) and speed, which may need to be varied according to conditions at the time of carrying out the inspection.

The inspection process is then carried out in step (iv) by flying the UAV 10 over the solar array 20, using the optimal waypoint flight path 24. During flight, the thermographic camera 14 records thermographic imaging data for each panel 22, so that temperature gradients can be identified, which may indicate defective panels, or defective areas within a panel 22. At the same time, the pyranometer 12 measures the solar irradiance, whilst the GPS receiver 13 provides a cross-reference of the precise location (and thus the specific panel 22) at which the solar irradiance data was logged. The visual camera 15 also records images of the panels 22 during the inspection process. The data from the pyranometer 12, and the GPS receiver 13 is recorded by the data logger 16, whilst the thermographic camera 14 and visual camera 15 record their geo-referenced data to a local SD memory card.

The data logger 16 transmits the logged solar irradiance and GPS data via a GSM signal to a remote device for the data processing step (v). The thermographic camera 14 and visual camera 15 also transmit images to the UAV operator via a live video link. Post-flight, a report can be produced, showing cross-referenced thermographic imaging data and visual images, for any panel 22 in the array 20 - identified by GPS location data - and cross-referenced with the recorded solar irradiance data at the time the thermographic data was captured.

Any defective panels in the array 20 will present a higher surface temperature than adjacent correctly functioning panels 22, and a temperature gradient can therefore be observed across the defective panel. Depending on the nature of the defect, a temperature gradient may also be observable within a panel 22, in single or multiple cells. However, temperature gradients can also vary where there is a natural fluctuation in solar irradiance during inspection. Measuring the solar irradiance (using the pyranometer 12) at the same time and location (indicated by the GPS receiver 13) as capturing thermographic data (using the thermographic camera 14) enables such naturally occurring temperature variations to be factored into the inspection results, thus increasing the accuracy and value of the defect detection process. Similarly, the recorded visual images (using the visual imaging camera 15) will indicate where observed temperature gradients may be attributable to obstructions on the surface of a panel 22, rather than to a defect.

## Claims

1. An unmanned aerial vehicle (UAV) (10) having remotely controllable and/or programmable control means, thereby to direct said UAV's flight path, said UAV having the following components mounted thereon:
- a thermographic camera (14);
- a pyranometer (12);
- a global positioning system (GPS) receiver (13); and
- a data logger (16), adapted to log data from at least the pyranometer and the GPS receiver during flight of said UAV;
wherein the pyranometer and the GPS receiver together form a geo-referencing pyranometer.

2. A UAV as claimed in claim 1, further having a visual imaging camera (15) mounted thereon, and wherein the thermographic camera and/or the visual imaging camera optionally have geo-referencing functionality, and wherein the data logger is optionally further adapted to log data from the thermographic camera and/or the visual imaging camera.

3. A UAV as claimed in any of the preceding claims, wherein the data logger is further adapted to communicate logged data to a remote device during flight, and optionally to communicate said logged data over a mobile telecommunications network via a GSM standard signal.

4. Apparatus for detecting and assessing defects in solar panel arrays (20), said apparatus comprising an unmanned aerial vehicle (UAV) as claimed in any of the preceding claims, and one or more remote devices in communication therewith.

5. Apparatus as claimed in claim 4, comprising a UAV as claimed in claim 2, and wherein said remote device is further adapted to receive data from said thermographic camera and/or said visual imaging camera and/or said data logger, and wherein said remote device comprises a processor adapted to process said data and to report cross-referenced thermographic data and solar irradiance data for a given GPS-referenced location in a solar panel array, and optionally to process and report visual imaging data for a given GPS-referenced location.

6. Apparatus as claimed in claim 5, wherein said remote device is further adapted to process recorded solar irradiance data, thereby to correct a measured irradiance (Eₘ) collected in the horizontal plane, to a corrected irradiance (E_{c}) to allow for the angle of tilt of solar panels (22) in an array.

7. Apparatus as claimed in claim 6, wherein said remote device is further adapted to process recorded thermographic data, thereby to normalise a recorded measured temperature gradient (ΔTₘ) at a corrected irradiance (E_{c}) to a normalised temperature gradient (ΔTₙ) at a standard irradiance of 1000W/m².

8. Apparatus as claimed in any of claims 4 to 7, comprising a remote device adapted to transmit pre-determined flight path (24) data to said control means.

9. A method for detecting and assessing defects in a solar panel array, using an unmanned aerial vehicle (UAV) as claimed in any of claims 1 to 3, said method comprising performing the steps of:
(i) mapping the location of panels in a solar array;
(ii) utilising mapped data collected in step (i) to generate an optimal waypoint flight path for said UAV;
(iii) transmitting the optimal waypoint flight path data generated in step (ii) to the control means of said UAV; and
(iv) flying said UAV over said solar array using the optimal waypoint flight path, whilst simultaneously recording at least thermographic imaging data and logging solar irradiance and GPS data
and subsequently:
(v) processing data recorded and logged in step (iv), to identify and report defective panels by temperature gradient, with cross-referenced solar irradiance data, thermographic imagery and GPS location data.

10. A method as claimed in claim 9, using a UAV as claimed in claim 2, wherein visual imaging data is also recorded in step (iv), and wherein the data processed in step (v) includes cross-referenced visual imagery data from step (iv).

11. A method as claimed in claim 9 or claim 10, wherein step (v) includes processing recorded solar irradiance data, thereby to correct a measured irradiance (Eₘ) collected in the horizontal plane, to a corrected irradiance (E_{c}) to allow for the angle of tilt of solar panels in an array.

12. A method as claimed in claim 11, wherein step (v) further includes processing recorded thermographic data, thereby to normalise a recorded measured temperature gradient (ΔTₘ) at a corrected irradiance (E_{c}) to a normalised temperature gradient (ΔTₙ) at a standard irradiance of 1000W/m².

13. A method as claimed in any of claims 9 to 12, using apparatus as claimed in any of claims 4 to 8, wherein thermographic and visual imaging data recorded in step (iv), and solar irradiance and GPS data logged in step (iv) are transmitted to a remote device.

14. A method as claimed in claim 13, wherein the generation and transmittal of the optimum waypoint flight in steps (ii) and (iii), and the processing and analysis in step (v) are performed using said remote device.

## Patentansprüche

1. Unbemanntes Fluggerät (UAV) (10) mit einer fernsteuerbaren und/oder programmierbaren Steuereinrichtung, um dadurch die Flugbahn des UAV zu bestimmen, wobei das UAV folgende daran angebrachte Komponenten aufweist:
- eine Wärmbildkamera (14),
- ein Pyranometer (12),
- einen Empfänger (13) für ein globales Positionsbestimmungssystem (GPS) und
- einen Datenlogger (16), der dazu eingerichtet ist, während des Fluges des UAV Daten von wenigstens dem Pyranometer und dem GPS-Empfänger aufzunehmen, wobei das Pyranometer und der GPS-Empfänger zusammen ein georeferenzierendes Pyranometer bilden.

2. UAV wie in Anspruch 1 beansprucht, das weiter eine daran angebrachte, visuell bildgebende Kamera (15) aufweist, und wobei die Wärmebildkamera und/oder die visuell bildgebende Kamera optional eine georeferenzierende Funktionalität haben und wobei der Datenlogger optional weiter dazu eingerichtet ist, um Daten von der Wärmebildkamera und/oder der visuell bildgebenden Kamera aufzunehmen.

3. UAV wie in einem der vorhergehenden Ansprüche beansprucht, wobei der Datenlogger weiter dazu eingerichtet ist, um aufgenommene Daten während des Fluges einem entfernten Apparat mitzuteilen und optional die aufgenommenen Daten über eine Mobiltelekommunikationsnetzwerk über ein GSM-Standardsignal mitzuteilen.

4. Vorrichtung zum Detektieren und Bewerten von Defekten in Solarmodul-Feldern (20), wobei die Vorrichtung ein unbemanntes Fluggerät (UAV) wie in einem der vorhergehenden Ansprüche beansprucht und einen oder mehrere entfernte Apparate in Kommunikation damit aufweist.

5. Vorrichtung wie in Anspruch 4 beansprucht, mit einem UAV wie in Anspruch 2 beansprucht, und wobei der entfernte Apparat weiter dazu eingerichtet ist, um Daten von der Wärmebildkamera und/oder von der visuell bildgebenden Kamera und/oder von dem Datenlogger zu empfangen, und wobei der entfernte Apparat einen Prozessor aufweist, der dazu eingerichtet ist, um die Daten zu verarbeiten und um quer-referenzierte Wärmebilddaten und Sonneneinstrahlungsdaten für eine gegebene GPS-referenzierte Position in einem Solarmodul-Feld zu melden und optional visuelle Bilddaten für eine gegebene GPS-referenzierte Position zu verarbeiten und zu melden.

6. Vorrichtung wie in Anspruch 5 beansprucht, wobei der entfernte Apparat weiter dazu eingerichtet ist, um aufgezeichnete Sonneneinstrahlungsdaten zu verarbeiten, um dadurch eine gemessene Einstrahlung (Eₘ), die in der horizontalen Ebene aufgenommen ist, in eine korrigierte Einstrahlung (E_{c}) zu korrigieren, um den Neigungswinkel der Solarmodule (22) in dem Feld zu berücksichtigen.

7. Vorrichtung wie in Anspruch 6 beansprucht, wobei der entfernte Apparat weiter dazu eingerichtet ist, um die aufgezeichneten Wärmebilddaten zu verarbeiten, um dadurch einen aufgenommenen, gemessenen Temperaturgradienten (ΔTₘ) bei einer korrigierten Einstrahlung (E_{c}) auf einen normalisierten Temperaturgradienten (ΔTₘ) bei einer Standardeinstrahlung von 1000 W/m² zu normalisieren.

8. Vorrichtung wie in einem der Ansprüche 4 bis 7 beansprucht, mit einem entfernten Apparat, der dazu eingerichtet ist, Daten einer vorgegebenen Flugbahn (24) zu der Steuereinrichtung zu senden.

9. Verfahren zum Detektieren und Bewerten von Defekten in einem Solarmodul-Feld unter Verwendung eines unbemannten Fluggerätes (UAV) wie in einem der Ansprüche 1 bis 3 beansprucht, wobei das Verfahren die Durchführung der Schritte beinhaltet:
(i) Kartieren der Position der Solarmodule in dem Solarmodul-Feld,
(ii) Verwenden der kartierten, im Schritt (i) gesammelten Daten, um eine optimale Wendepunkt-Flugbahn für das UAV zu generieren,
(iii) Übersenden der in Schritt (ii) generierten optimalen Wendepunkt-Flugbahndaten zu der Steuereinrichtung des UAV und
(iv) Fliegen des UAV über das Solarmodul-Feld unter Anwendung der optimalen Wendepunkt-Flugbahn, während gleichzeitig wenigstens Wärmebilddaten aufgezeichnet werden und Sonneneinstrahlungs- und GPS-Daten aufgenommen werden, und anschließend:
(v) Verarbeiten der in Schritt (iv) aufgezeichneten und aufgenommenen Daten, um defekte Module durch den Temperaturgradienten zu identifizieren und mit quer-referenzierten Sonneneinstrahlungsdaten, Wärmebilddaten und GPS-Positionsdaten zu melden.

10. Verfahren wie in Anspruch 9 beansprucht, das ein UAV wie in Anspruch 2 beansprucht verwendet, wobei in Schritt (iv) auch visuelle Bilddaten aufgenommen werden und wobei die in Schritt (v) verarbeiteten Daten quer-referenzierte visuelle Bilddaten aus Schritt (iv) umfassen.

11. Verfahren wie in Anspruch 9 oder Anspruch 10 beansprucht, wobei Schritt (v) das Verarbeiten von aufgezeichneten Sonneneinstrahlungsdaten beinhaltet, um dadurch eine gemessene, in der horizontalen Ebene erfasste Einstrahlung (Eₘ) zu korrigieren auf eine korrigierte Einstrahlung (E_{c}), um den Neigungswinkel der Solarmodule in einem Feld zu berücksichtigen.

12. Verfahren wie in Anspruch 11 beansprucht, wobei Schritt (v) weiter beinhaltet, aufgezeichnete Wärmebilddaten zu verarbeiten, um dadurch einen aufgezeichneten, gemessenen Temperaturgradienten (ΔTₘ) bei einer korrigierten Einstrahlung (E_{c}) auf einen normalisierten Temperaturgradienten (ΔTₘ) bei einer Standardeinstrahlung von 1000 W/m² zu normalisieren.

13. Verfahren wie in einem der Ansprüche 9 bis 12 beansprucht, unter Verwendung einer Vorrichtung wie in einem der Ansprüche 4 bis 8 beansprucht, wobei Wärmebild- und visuelle Bilddaten, die in Schritt (iv) aufgenommen worden sind, und Sonneneinstrahlungs- und GPS-Daten, die in Schritt (iv) aufgenommen worden sind, zu einem entfernten Apparat gesendet werden.

14. Verfahren wie in Anspruch 13 beansprucht, wobei die Erzeugung und die Übertragung der optimalen Wendepunkt-Flugbahn in den Schritten (ii) und (iii) und die Verarbeitung und die Analyse in Schritt (v) unter Verwendung des entfernten Apparates durchgeführt werden.

## Revendications

1. Véhicule aérien sans pilote (UAV) (10) ayant des moyens de commande commandables et/ou programmables à distance, pour diriger la trajectoire de vol dudit UAV, ledit UAV ayant les composants suivants montés sur ledit UAV :
- une caméra thermographique (14) ;
- un pyranomètre (12) ;
- un récepteur de système de positionnement mondial (GPS) (13) ; et
- un enregistreur de données (16), adapté pour enregistrer les données provenant au moins du pyranomètre et du récepteur GPS pendant le vol dudit UAV ;
dans lequel le pyranomètre et le récepteur GPS forment ensemble un pyranomètre géo-référencé.

2. UAV tel que revendiqué dans la revendication 1, ayant en outre une caméra d'imagerie visuelle (15) montée sur ledit UAV, et dans lequel la caméra thermographique et/ou la caméra d'imagerie visuelle ont de manière optionnelle une fonctionnalité de géo-référencement, et dans lequel l'enregistreur de données est en outre de manière optionnelle adapté pour enregistrer des données provenant de la caméra thermographique et/ou de la caméra d'imagerie visuelle.

3. UAV tel que revendiqué dans l'une quelconque des revendications précédentes, dans lequel l'enregistreur de données est en outre adapté pour communiquer des données enregistrées à un périphérique distant pendant le vol, et de manière optionnelle pour communiquer des données enregistrées à un réseau de télécommunications mobile via un signal standard GSM.

4. Appareil pour détecter et évaluer des défauts dans des réseaux de panneaux solaires (20), ledit appareil comprenant un véhicule aérien sans pilote (UAV) tel que revendiqué dans l'une quelconque des revendications précédentes, et un ou plusieurs périphériques distants en communication avec celui-ci.

5. Appareil tel que revendiqué dans la revendication 4, comprenant un UAV tel que revendiqué dans la revendication 2, et dans lequel ledit périphérique distant est en outre adapté pour recevoir des données provenant de ladite caméra thermographique et/ou de ladite caméra d'imagerie visuelle et/ou dudit enregistreur de données, et dans lequel ledit périphérique distant comprend un processeur adapté pour traiter lesdites données et pour rapporter des données thermographiques croisées et des données d'irradiation solaire pour une localisation donnée référencée par GPS dans un réseau de panneaux solaires, et de manière optionnelle pour traiter et rapporter des données d'imagerie visuelle pour une localisation donnée référencée par GPS.

6. Appareil tel que revendiqué dans la revendication 5, dans lequel ledit périphérique distant est en outre adapté pour traiter des données d'irradiation solaire consignées, pour corriger ainsi une irradiation mesurée (Eₘ) collectée dans un plan horizontal, en une irradiation corrigée (E_{c}) pour tenir compte de l'angle d'inclinaison des panneaux solaires (22) dans un réseau.

7. Appareil tel que revendiqué dans la revendication 6, dans lequel ledit périphérique distant est en outre adapté pour traiter des données thermographiques consignées, pour normaliser un gradient de température mesurée consigné (ΔTₘ) à une irradiation corrigée (E_{c}) en un gradient de température normalisé (ΔTₙ) à une irradiation standard de 1000W/m².

8. Appareil tel que revendiqué dans l'une quelconque des revendications 4 à 7, comprenant un périphérique distant adapté pour transmettre des données de trajectoire de vol prédéterminée (24) audits moyens de commande.

9. Procédé pour détecter et évaluer des défauts dans un réseau de panneaux solaires, utilisant un véhicule aérien sans pilote (UAV) tel que revendiqué dans l'une quelconque des revendications 1 à 3, ledit procédé comprenant la mise en œuvre des étapes de :
(i) cartographie de l'emplacement des panneaux dans un réseau solaire ;
(ii) utilisation des données cartographiées collectées dans l'étape (i) pour générer une trajectoire de vol de point de cheminement optimale pour ledit UAV ;
(iii) transmission des données de trajectoire de vol de point de cheminement optimale générées dans l'étape (ii) aux moyens de commande dudit UAV ; et
(iv) vol dudit UAV au-dessus dudit réseau solaire utilisant la trajectoire de vol de point de cheminement optimale, tout en enregistrant de manière simultanée au moins des données d'imagerie thermographique et en enregistrant l'irradiation solaire et des données GPS, et ultérieurement :
(v) traitement des données consignées et enregistrées dans l'étape (iv) pour identifier et signaler les panneaux défectueux par gradient de température, avec des données d'irradiation solaire croisées, des images thermographiques et des données de localisation GPS.

10. Procédé tel que revendiqué dans la revendication 9, utilisant un UAV tel que revendiqué dans la revendication 2, dans lequel des données d'imagerie visuelle sont également consignées dans l'étape (iv), et dans lequel les données traitées dans l'étape (v) incluent des données d'imagerie visuelle croisées provenant de l'étape (iv).

11. Procédé tel que revendiqué dans la revendication 9 ou la revendication 10, dans lequel l'étape (v) inclut le traitement des données d'irradiation solaire consignées, pour ainsi corriger une irradiation mesurée (Eₘ) collectée dans le plan horizontal en une irradiation corrigée (E_{c}) pour tenir compte de l'angle d'inclinaison des panneaux solaires dans un réseau.

12. Procédé tel que revendiqué dans la revendication 11, dans lequel l'étape (v) inclut en outre le traitement des données thermographiques consignées, pour ainsi normaliser un gradient de température mesurée consigné (ΔTₘ) à une irradiation corrigée (E_{c}) en un gradient de température normalisé (ΔTₙ) à une irradiation standard de 1000W/m².

13. Procédé tel que revendiqué dans l'une quelconque des revendications 9 à 12, utilisant un appareil tel que revendiqué dans l'une quelconque des revendications 4 à 8, dans lequel des données thermographiques et d'imagerie visuelle consignées dans l'étape (iv), et des données d'irradiation solaire et GPS enregistrées dans l'étape (iv) sont transmises au périphérique distant.

14. Procédé tel que revendiqué dans la revendication 13, dans lequel la génération et la transmission de vol de point de cheminement optimal dans les étapes (ii) et (iii), et le traitement et l'analyse dans l'étape (v) sont mise en œuvre en utilisant ledit périphérique distant.
